# EUROPEAN PATENT APPLICATION

(11) **EP 2 206 959 A2**
(43) Date of publication of application: **14.07.2010**
(21) Application number: 10150153.4
(22) Date of filing: 05.01.2010
(51) Int. Cl.: F23R 3/28

(54) **Premixed partial oxidation syngas generation and gas turbine system**

(30) Priority: 09.01.2009 US 351152
(71) Applicant: General Electric Company, Schenectady, NY 12345 (US)
(72) Inventor: Haynes, Joel Meier, Niskayuna, NY 12304 (US)
(74) Representative: Gray, Thomas

(57) **Abstract**

A gas turbine system (10,300,500) includes a fuel reformer system (12,50,80,110,130,311,504) comprising a fuel inlet configured to receive a fuel slipstream (30,52,84); an oxygen inlet configured to introduce an oxygen slipstream (32,86,88); a preconditioning zone (54) configured to pretreat the fuel slipstream; a mixing zone (34,58) comprising a premixing device configured to facilitate mixing of the fuel slipstream and the oxygen slipstream to form a gaseous premix; a reaction zone (60) configured to generate a syngas (42,62) from the gaseous premix; a quench zone (66) configured to mix a fuel stream into the syngas to form a hydrogen-enriched fuel mixture (48,68); and a gas turbine (22) configured to receive the fuel mixture.

## Description

### BACKGROUND OF THE INVENTION

The invention relates generally to gas turbine combustion systems, and more particularly to fuel reformers based on premixed partial oxidation combustion for improving the efficiency of the gas turbine systems.

There is a drive within the industry to produce new turbines that will operate at high efficiency without producing undesirable air polluting emissions. The primary air polluting emissions usually produced by turbines burning conventional hydrocarbon fuels are oxides of nitrogen, carbon monoxide and unburned hydrocarbons. The oxidation of molecular nitrogen in air breathing engines can be highly dependent upon the maximum temperature in the combustion system reaction zone and the residence time for the reactants at the maximum temperatures reached within the combustor. The level of thermal nitrogen oxides (NOx) formation can be minimized by maintaining the reaction zone temperature below the level at which thermal NOx is formed or by maintaining an extremely short residence time at high temperature such that there is insufficient time for the NOx formation reactions to progress.

Fuel injection and mixing are critical to achieving efficient and clean combustion in gas turbine engines. In the case of gaseous fuels, it is desirable to obtain an optimal level of mixing between air, fuel, and combustion products in a combustion zone. There has been increased demand for gas turbines that operate in partially premixed (PP) or lean, premixed (LP) modes of combustion in an effort to meet increasingly stringent emissions goals. PP and LP combustion can reduce harmful emissions of NOx without loss of combustion efficiency.

However, combustion instabilities, also known as combustion dynamics, are commonly encountered in development of low emissions gas turbine engines. Combustion dynamics in the form of fluctuations in pressure, heat-release rate, and other perturbations in flow may lead to problems such as lean blow out, structural vibration, excessive heat transfer to a chamber, and consequently lead to failure of the system.

Reforming the fuel is a solution to reduce combustion dynamics. One method employs a rich catalytic system to reform the fuel just prior to combustion and further integrate it into the combustion chamber. However, such techniques can require expensive catalysts and can be large and complex making them hard to incorporate in an existing combustion system.

### BRIEF DESCRIPTION OF THE INVENTION

Briefly, according to one embodiment, a gas turbine system is provided. The gas turbine system includes a fuel reformer system comprising a fuel inlet configured to receive a fuel slipstream; an oxygen inlet configured to introduce an oxygen slipstream; a preconditioning zone configured to pretreat the fuel slipstream; a mixing zone comprising a premixing device configured to facilitate mixing of the fuel slipstream and the oxygen slipstream to form a gaseous premix; a reaction zone configured to generate a syngas from the gaseous premix; and a quench zone configured to mix a fuel stream into the syngas to form a hydrogen-enriched fuel mixture; and a gas turbine configured to receive the fuel mixture.

In another embodiment, a gas turbine system includes an intake section; a compressor section downstream from and in fluid communication with the intake section; a combustor section comprising a primary combustion system downstream from and in fluid communication with the compressor section; a secondary combustion system downstream from and in fluid communication with the primary combustion system; a fuel reformer system in fluid communication with the primary combustion system and the secondary combustion systems, wherein the fuel reformer system is configured to provide a hydrogen-enriched fuel mixture to the primary combustion system and/or secondary combustion system, and wherein the fuel reformer system comprises a fuel inlet configured to receive a fuel slipstream; an oxygen inlet configured to introduce an oxygen slipstream; a preconditioning zone configured to pretreat the fuel slipstream; a mixing zone comprising a premixing device configured to facilitate mixing of the fuel slipstream and the oxygen slipstream to form a gaseous premix; a reaction zone configured to generate a syngas from the gaseous premix; and a quench zone configured to mix a fuel stream into the syngas to form a hydrogen-enriched fuel mixture; and a turbine section downstream from and in fluid communication with the secondary combustion system.

In another embodiment, a gas turbine system includes an intake section; a compressor section downstream from and in fluid communication with the intake section, configured to compress an oxygen containing stream; a combustor section downstream from and in fluid communication with the compressor section, wherein the combustor section is configured to receive the compressed oxygen containing stream and to combust a fuel stream to generate a combustor exit gas stream; a primary turbine downstream from and in fluid communication with the combustor section, configured to partially expand the combustor exit gas stream to form a working gas stream; a fuel reformer system comprising a fuel inlet configured to receive a fuel slipstream; an oxygen inlet configured to introduce an oxygen slipstream; a preconditioning zone configured to pretreat the fuel slipstream; a mixing zone comprising a premixing device configured to facilitate mixing of the fuel slipstream and the oxygen slipstream to form a gaseous premix; a reaction zone configured to generate a syngas from the gaseous premix; and a quench zone configured to mix a fuel stream into the syngas to form a hydrogen-enriched fuel mixture; and a reheating device downstream from and in fluid communication with the primary turbine and the fuel reformer system, configured to combust the working gas stream and the a hydrogen-enriched fuel mixture to form an exit gas stream; a second turbine downstream from and in fluid communication with the reheating device configured to expand the exit gas stream.

### BRIEF DESCRIPTION OF THE DRAWINGS

There follows a detailed description of embodiments of the invention by way of example only with reference to the accompanying drawings, in which:
FIG. 1 is a diagrammatical illustration of an exemplary embodiment of a gas turbine system having a fuel reformer system;
FIG. 2 is a diagrammatical illustration of an exemplary embodiment of the fuel reformer system of FIG. 1;
FIG. 3 is a block diagram representation of an exemplary embodiment of a fuel reformer system;
FIG. 4 is a schematic illustration of an exemplary embodiment of mixing and reaction zones of a fuel reformer system;
FIG. 5 is a schematic illustration of an exemplary embodiment of mixing and reaction zones of a fuel reformer system employing an impingement cooling mechanism;
FIG. 6 is a schematic illustration of an exemplary embodiment of mixing and reaction zones of a fuel reformer system comprising a ceramic liner;
FIG. 7 is a diagrammatical illustration of an exemplary embodiment of a premixing device employed in the fuel reformer system generator of FIG. 3;
FIGS. 8-11 are diagrammatical illustrations of exemplary configurations of the premixing device of FIG. 7 having different oxygen slipstream injection locations;
FIG. 12 is a cross-sectional view of another exemplary configuration of the pre-mixing device from the fuel reformer system of FIG. 3 comprising a plurality of counter swirling vanes;
FIG. 13 is a partial cross-sectional side view of an exemplary embodiment of a staged gas turbine combustion system employing the fuel reformer system of FIG. 3;
FIG. 14 is an axial view of a secondary combustion system for the combustor section of FIG. 13 for fluid communication with the fuel reformer system of FIG. 3; and
FIG. 15 is a diagrammatical illustration of an exemplary embodiment of a gas turbine system having a reheat device in fluid communication with a fuel reformer system.

### DETAILED DESCRIPTION OF THE INVENTION

As described in detail below, embodiments of the present disclosure provide gas turbine systems incorporating a fuel reformer system. The systems and techniques described herein function to enhance power output and efficiency of gas turbine systems, such as staged gas turbine systems and reheat gas turbine systems. The reformer system utilized in the gas turbine systems is configured to provide mixing and reacting of a slipstream of fuel with a slipstream of oxygen to increase a concentration of hydrogen through premixed partial oxidation combustion. The introduction of hydrogen into the fuel allows lowering of a lean blow out point and enables reduction in combustion dynamics for the gas turbine system. The term "combustion dynamics" used herein refers to fluctuations in oxygen pressure, temperature, heat release and unsteady flow oscillations that effect operation of an engine, including a gas turbine. Further, the term 'lean blow out point' used herein refers to a point of loss of combustion in a combustor. Variations in fuel composition and flow disturbances result in a loss of combustion in sufficiently lean flames. It is hence advantageous to operate the systems with a highly reactive fuel component, such as hydrogen. As disclosed herein, embodiments of the disclosure can include a fuel reforming retrofit unit that provides pretreatment of fuel via means of combustion, which can be disposed in existing staged and reheat gas turbine systems. Also, the terms "fuel" and "oxygen" are used herein to refer to some of the components necessary to operate the combustor of a gas turbine combustion system. While the terms are used consistently for ease in discussion, it is to be understood that "fuel" can mean any combustible fluid suitable for a gas turbine, such as, without limitation, natural gas, diesel, jet-fuel, logistic fuel (JP-8), kerosene, fuel oil, bio-diesel, gasoline, methanol, ethanol, ethanol-containing gasoline including E-10, E-85, E-90 and E-95, and the like. Similarly, "oxygen" can mean any suitable oxygen-containing fluid for combusting the fuel, such as, without limitation, air, oxygen, oxygen-enriched air, and the like.

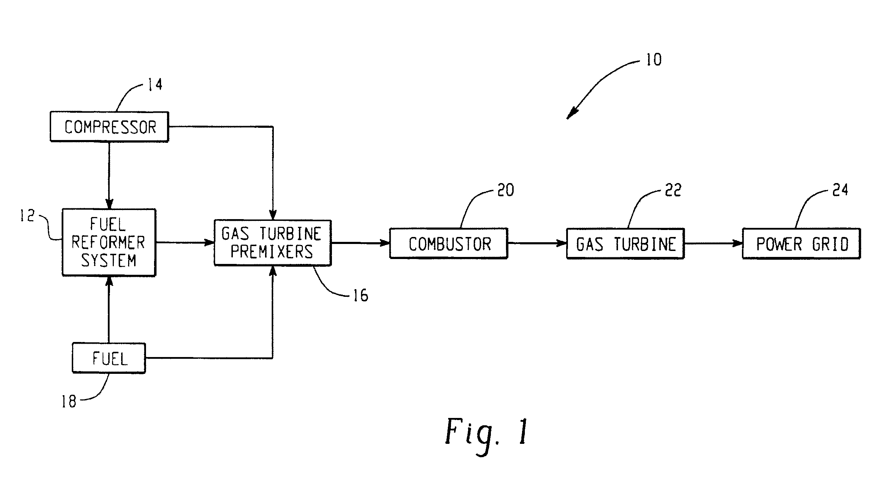

Turning now to FIG. 1, a block diagram illustrating an exemplary embodiment of a gas turbine system 10 is shown. The gas turbine system 10 includes a fuel reformer system 12 for increasing the hydrogen concentration to the gas turbine. A compressor 14 is in fluid communication with both the fuel reformer system 12 and the gas turbine pre-mixers 16. The compressor 14 is configured to supply air to both the fuel reformer system 12 and the pre-mixers 16. A fuel stream 18 is also in fluid communication with the fuel reformer system 12. As will be discussed in greater detail below, the fuel and air combine and react in the fuel reformer system 12 to form the syngas, which can then be combined with more fuel and sent to the gas turbine pre-mixers 16. The syngas and fuel is further mixed with air from the compressor 14 and the entire pre-mixed fuel is fed to a combustor 20. The pre-mixed fuel is combusted in the combustor 20 and expanded in the gas turbine 22. The turbine is driven by the combustion and expansion and the energy is converted to electricity, where it can be sent to a power grid 24 to provide power, or can be stored and used at a later time.

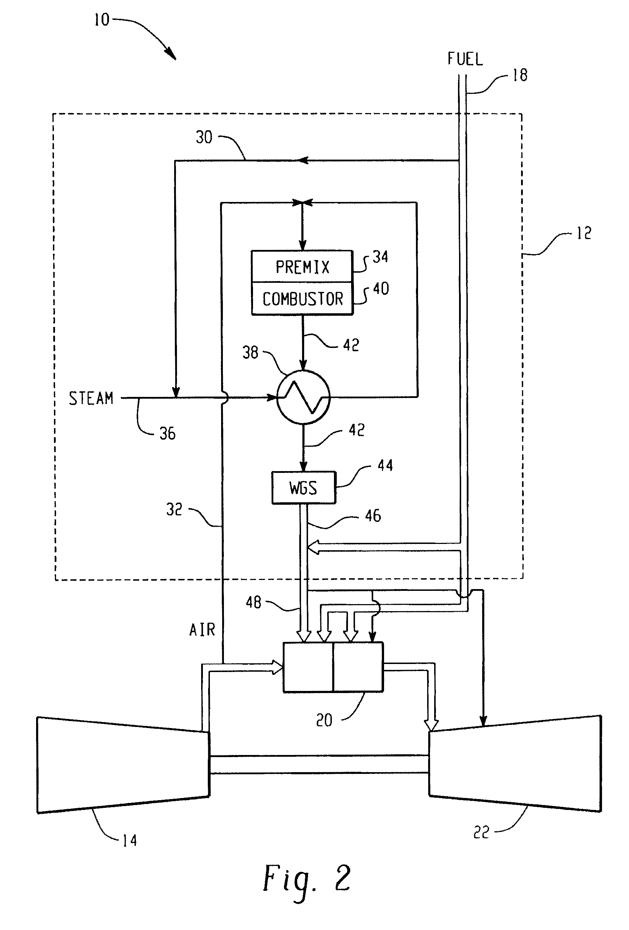

FIG. 2 further illustrates an exemplary embodiment of the fuel reformer system 12 of FIG. 1. A fuel slipstream 30 is split from the main fuel stream 18 and is combined with an oxygen slipstream 32 from the gas turbine compressor 14 and sent to a premixing zone 34 of the fuel reformer system 12. As used herein, the term "oxygen" is generally used to refer to any oxidant suitable for mixing with the fuel to form a hydrogen-enriched fuel mixture. Exemplary oxygen streams can include, without limitation, pure oxygen (O₂), air, oxygen-enriched air, and the like.

In an optional embodiment, the fuel slipstream 30 can be combined with steam 36 and fed through a heat exchanger 38 configured to pre-heat the fuel slipstream 30 prior to mixing with the oxygen slipstream 32 in the premixing zone 34. The pre-heated fuel slipstream 30, with optional steam 36, can then be premixed with the oxygen slipstream 32 in the premixing zone 34. In another embodiment, the steam can be a component of the fuel slipstream 30 or the oxygen slipstream 32, rather than being a separate supply stream as illustrated in FIG. 2.

The fuel and oxygen slipstreams are mixed to form a gaseous premix, which is immediately fed into a combustor 40. The gaseous premix is combusted and a syngas 42 is formed. The syngas 42 can be cooled when it is diluted with the fuel stream 18 to form a hydrogen-enriched fuel mixture, or it can be cooled with steam. When the optional heat exchanger 38 is present in the fuel reformer system 12, the syngas 42 can be cooled by passing through the heat exchanger down to a temperature of about 250 degrees Celsius (°C) to about 450 °C, specifically about 350 °C. Cooling the syngas 42 is particularly advantageous when an optional water gas shift (WGS) reactor 44 is present in the fuel reformer system 12. The WGS reactor 44 can be disposed downstream of the catalytic partial oxidation reactor 40, and in this case, downstream of the heat exchanger 38. The WGS reactor 44 can be configured to further increase a concentration of hydrogen in the syngas by reacting steam with carbon monoxide in the syngas to form more hydrogen. The syngas 46 can then be recombined with the fuel stream 18 to form a hydrogen-enriched fuel mixture 48, which can be fed to the combustor 20 of the gas turbine system 10.

In one embodiment, the hydrogen-enriched fuel mixture 48 can be fed to the first and/or second stages of staged combustion system, as indicated by the arrows in FIG. 2. In still another embodiment, the hydrogen-enriched fuel mixture 48 can also be fed directly to the gas turbine 22.

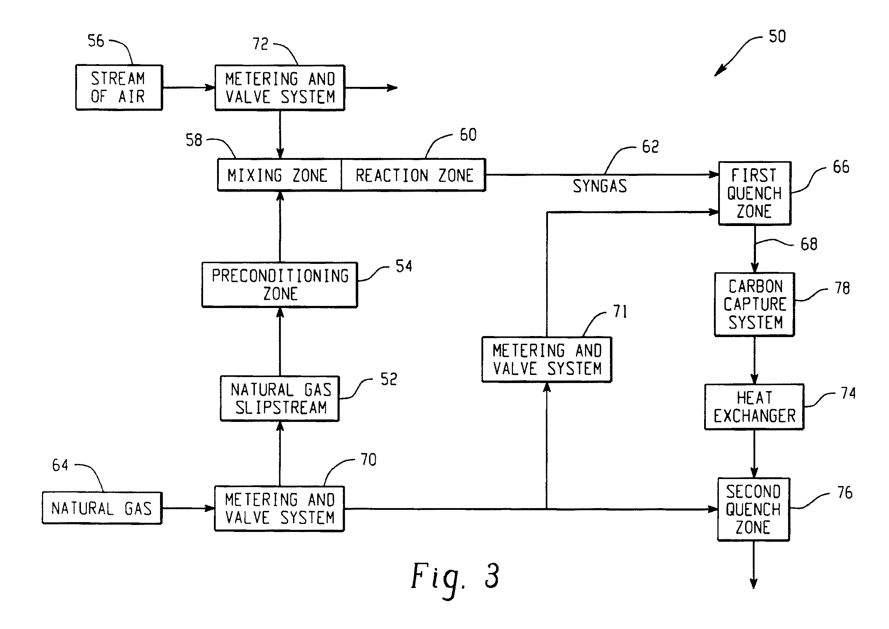

FIG. 3 is a block diagram representation of a fuel reformer system 50, for use in a gas turbine system. The fuel reformer system 50 includes a fuel slipstream 52 that is pretreated in a preconditioning zone 54. In a particular embodiment, the fuel slipstream 54 can be pre-mixed with water or steam. An oxygen slipstream 56 is introduced to mix with the fuel slipstream 52 and is mixed in a mixing zone 58 in rich proportions. As used herein, the term "rich proportions" refers to a stoichiometric ratio of the fuel slipstream 52 and the oxygen slipstream 56 of about 1.5 and about 4. In an exemplary embodiment, the stoichiometric ratio of the fuel slipstream 52 and the oxygen slipstream 56 can be about 2.3. In a particular embodiment, the oxygen slipstream 56 can be supplemented with additional oxygen.

Further, the fuel slipstream 52 and the oxygen slipstream 56 are allowed to react in a reaction zone 60 to generate a gaseous mixture of synthesis gas 62, commonly known as syngas, which can comprise hydrogen and carbon monoxide. The syngas is formed when the premixed fuel-oxygen mixture undergoes partial oxidation combustion. In a particular embodiment, the syngas can include at least about 20 percent by weight of hydrogen gas. In another embodiment, the synthetic gas includes at least one hydrocarbon species. In yet another embodiment, the syngas includes hydrogen, carbon monoxide, nitrogen and water. In another embodiment, the syngas 62 can have a temperature less than about 2000 degrees Fahrenheit. In an exemplary embodiment, the reaction zone 60 can have a residence time of less than about 200 milliseconds (ms). The term "residence time" refers to a time period during which the fuel slipstream 52 and the oxygen slipstream 56 react in the reaction zone 60.

After the reaction zone 60, a fuel supply 64 can be finally directed back into a quench zone 66 to mix with the syngas 62 as it leaves the reaction zone 60. A mixture of the fuel supply 64 and the syngas 62 forms the hydrogen-enriched syngas fuel mixture 68, which can then be further directed into a downstream combustor of the gas turbine combustion system. In a particular embodiment, the fuel reformer system 50 can have an cross-sectional area equal to about 0.02 to about 0.3 of an area of the gas turbine combustor. More particularly, the fuel reformer system can have a volume that is 2 to 75% of the volume of the gas turbine combustion section.

In another embodiment, the fuel supply 64 can be controlled by a metering and valve system 70 to generate the fuel slipstream 52 that is passed into the preconditioning zone 54. An optional second metering and valve system 71 can be disposed after the fuel slipstream 52 has been formed to further partition the fuel supply between the first quench zone 66 and the second quench zone 76. Similarly, an oxygen stream can be passed through a metering and valve system 72 to generate the oxygen slipstream 56. The oxygen slipstream 56 and the fuel slipstream 52 are then mixed in the mixing zone 58 and allowed to react in the reaction zone 60. The fuel supply 64 regulated by the metering and valve system 70 can also be directed into the quench zone 66 to mix with the syngas 62 leaving the reaction zone 60.

In still another embodiment, the fuel stream 64 and the syngas 62 can be mixed in the first quench zone 66 to form the hydrogen-enriched fuel mixture 68. The fuel mixture 68 can then be directed into a heat exchanger 74 that enables cooling of the fuel mixture 68. A cooled fuel mixture from the heat exchanger 74 can be directed into a second quench zone 76, wherein the cooled fuel mixture is further quenched by the fuel stream 64. In yet another embodiment, a carbon capture system 78 can be included in the fuel reformer system 50. The hydrogen-enriched fuel mixture 68 can be passed through the carbon capture system 78. The carbon capture system 78 can reduce the amount of carbon monoxide from the fuel mixture 68, resulting in a refined mixture. The mixture can then be further passed into the heat exchanger 74, as mentioned above.

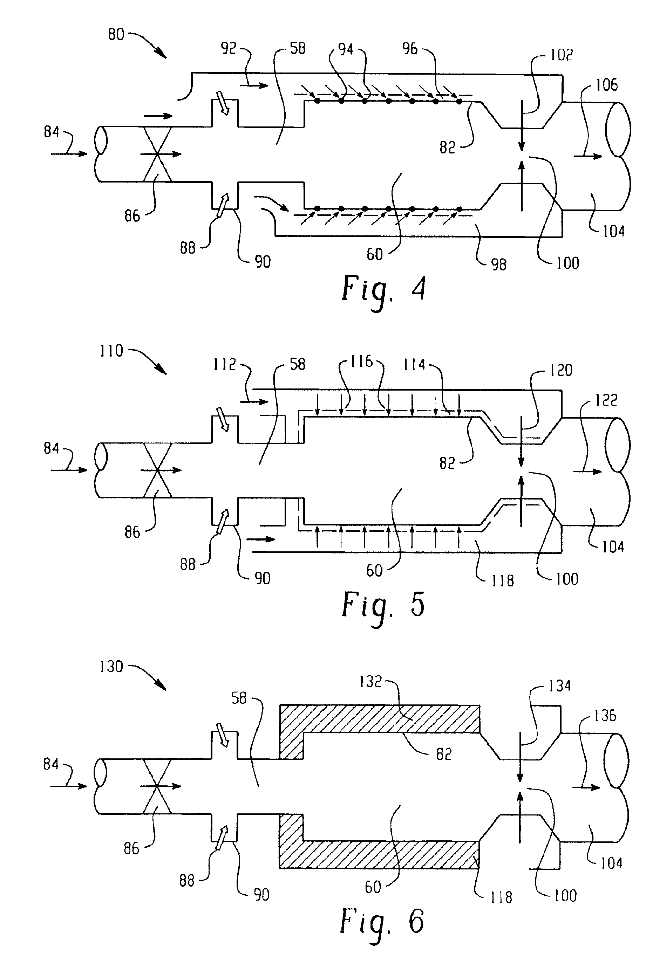

FIGS. 4 and 5 illustrate various cooling mechanisms that can be employed in the fuel reformer system 10 in FIG. 3. FIG. 4 is a schematic illustration of a fuel reformer system 80 employing effusion cooling through fuel to extract heat from walls 82 of a reaction zone 60 as referenced in FIG. 3. A fuel slipstream 84 passing through an inlet 86 mixes with a slipstream of oxygen 88 entering through an inlet 90 in a mixing zone 58 as referenced in FIG. 3. Multiple jets 92 of fuel are injected into injection holes 94 on a wall liner 96 in a confined space 98. A mixture of syngas is formed via partial oxidation combustion at the reaction zone 60 and passes through a quench 100 that provides rapid cooling prior to mixing with a stream 102 of fuel and entering a downstream combustion chamber 104. A cooled hydrogen-enriched fuel mixture 106 further enters the combustion chamber 104.

FIG. 5 is a schematic illustration of a fuel reformer system 110 employing impingement cooling through fuel to extract heat from walls 82 as referenced in FIG. 4 of a reaction zone 60 as referenced in FIG. 3. A fuel slipstream 84, as referenced in FIG. 4, passing through an inlet 86 mixes with a slipstream of oxygen 88 entering through an inlet 90 in a mixing zone 58 as referenced in FIG. 3. Multiple jets 112 of fuel at a very high velocity are impinged on a wall liner 114 through multiple cooling holes 116 in a confined space 118. In a particular embodiment, the velocity can vary about 10 m/sec to about 100 m/sec. A syngas is formed at the reaction zone 20 and passes through a quench 100 that provides rapid cooling prior to mixing with a stream 120 of fuel and entering a combustion chamber 104, as referenced in FIG. 4. A cooled hydrogen-enriched fuel mixture 122 further enters into the combustion chamber 104.

FIG. 6 is a schematic illustration of a fuel reformer system 130 employing a ceramic liner 132 outside of walls 82 as referenced in FIG. 4 of a reaction zone 60 as referenced in FIG. 3. A slip stream of fuel 84 passing through an inlet 86 pre-mixes with a slip stream of oxygen 88 entering through an inlet 90 in a mixing zone 58 as referenced in FIG. 3. A syngas mixture is formed at the reaction zone 20 and passes through a quench 100 that provides rapid cooling prior to mixing with a stream 134 of fuel and entering a combustion chamber 104 as referenced in FIG. 4. A cooled mixture 136 further enters into the combustion chamber 104. The ceramic liner 132 provides desirable resistance against corrosion and high temperatures.

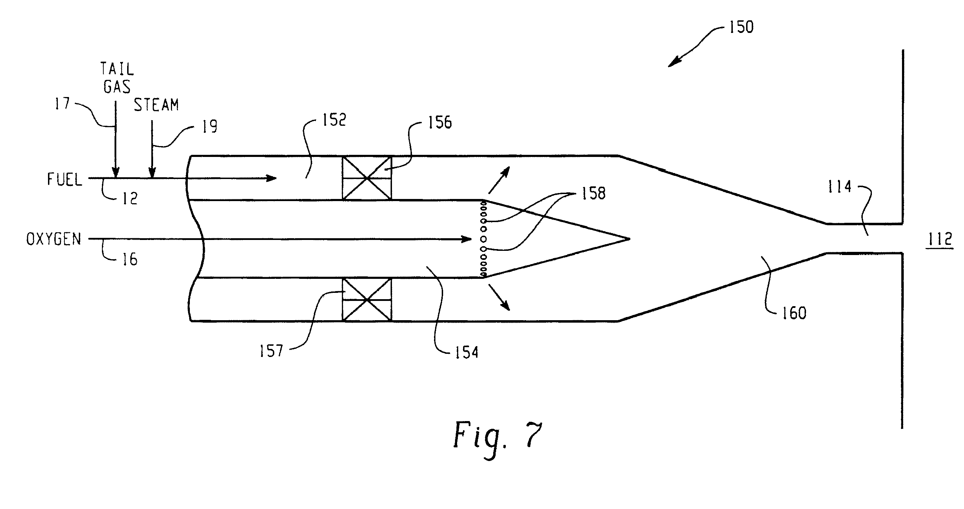

As described in each of the embodiments and shown in the figures, the fuel is mixed with an oxygen in the mixing zone 58 before reacting to form a hydrogen-comprising syngas in the reaction zone 60. The mixing zone 58 can be configured to enhance the conversion efficiency and decrease the capital cost of the fuel reformer systems described above. In one embodiment, the mixing zone 58 can include a premixing device. The fuel can be preconditioned through the premixing device, and oxygen can be introduced in a transverse direction to the flow of the fuel to facilitate the premixing of the fuel and oxygen to form a gaseous pre-mix. It should be noted that the flow conditioning of the fuel stream and subsequent introduction of oxygen can enable fast mixing of the fuel stream and oxygen. In one embodiment, a premixing residence time of the fuel reformer system can be in the range about 0.5ms to about 100 ms. In certain embodiments, a plurality of premixing devices can be disposed upstream of the reaction zone 60 in the mixing zone 58. Moreover, in certain embodiments, a tail gas 57 can be introduced into the fuel stream to further improve the conversion efficiency of the fuel reformer system. Similarly steam 59 can also be introduced into the fuel stream to increase the H₂:CO ratio and for reducing soot formation. Further, the operation of the plurality of premixing devices can be selectively controlled via a controller based upon a desired conversion efficiency of the fuel reformer system. Exemplary configurations of the premixing devices are explained in a greater detail below with reference to FIGS. 7-10.

FIG. 7 is a diagrammatical illustration of an exemplary configuration 150 of the premixing device employed in the mixing and preconditioning zones of the fuel reformer systems of FIGS. 1 through 6. In the illustrated embodiment, the premixing device 150 includes a fuel inlet 152 configured to introduce the fuel slipstream 52 within the premixing device 150. In addition, the premixing device 150 includes an oxygen inlet 154 configured to introduce oxygen slipstream 56 within the premixing device 150. The pre-mixing device can further include a flow-conditioner configured to precondition the fuel slipstream 52 prior to introduction of oxygen into the premixing device 150. In this embodiment, the premixing device includes a plurality of swirler vanes 156 configured to provide a swirl movement to the fuel slipstream 52. In another embodiment, the pre-mixing device can further include a plurality of counter flow swirler vanes 157. In an alternate embodiment, the pre-mixing device can include a nozzle configured to accelerate the fuel slipstream 52 to a desired velocity. However, other types of flow conditioners for pre-conditioning the fuel slipstream 52 can be envisaged.

In operation, the fuel slipstream 52 is pre-conditioned via the plurality of swirler vanes 156. Further, oxygen slipstream 56 is introduced in a transverse direction to the direction of injection of the fuel slipstream 52 via the oxygen inlet 154. In the illustrated embodiment, oxygen slipstream 56 is injected at a location 158 disposed downstream of the plurality of swirler vanes 156. In one embodiment, the oxygen slipstream 56 is introduced through a plurality of holes disposed on each of the plurality of swirler vanes 156. The pressure drop across the plurality of holes for introducing the oxygen slipstream 56 can be less than about 5%. Alternatively, the oxygen slipstream 56 can be introduced through a center body or walls of the premixing device 150. In still another embodiment, the oxygen slipstream 56 can be injected through the plurality of counter flow swirler vanes 157 together with, or in place of, the plurality of swirler vanes 156. In one embodiment, the oxygen slipstream 56 can be injected at an angle that has a component perpendicular to the direction of flow. Furthermore, the injection holes can also introduce swirl around the axis of the centerbody of the premixing device 150. The pre-conditioned fuel slipstream 52 and oxygen slipstream 56 are then mixed in a premixing region 160 to form a gaseous pre-mix that is further directed to a combustion chamber 162 of the reaction zone 20 through an exit 164. In the illustrated embodiment, the premixing region 160 is designed to resist flameholding even in the presence of an ignition source by minimizing recirculation zones.

In one embodiment, the temperature of the fuel slipstream 52 in the premixing device 150 can be about 400°F to about 1300°F, and the temperature of the oxygen slipstream 56 can be about 200°F to about 500°F. Further, the ratio of an effective area of the oxygen inlet 154 and an effective area of the flow conditioning device 156 can be about 0.1 to about 0.9. As used herein, the term 'effective area' of the oxygen inlet is intended to refer to the volumetric flowrate of the oxygen slipstream through the inlet divided by the average velocity of the stream.

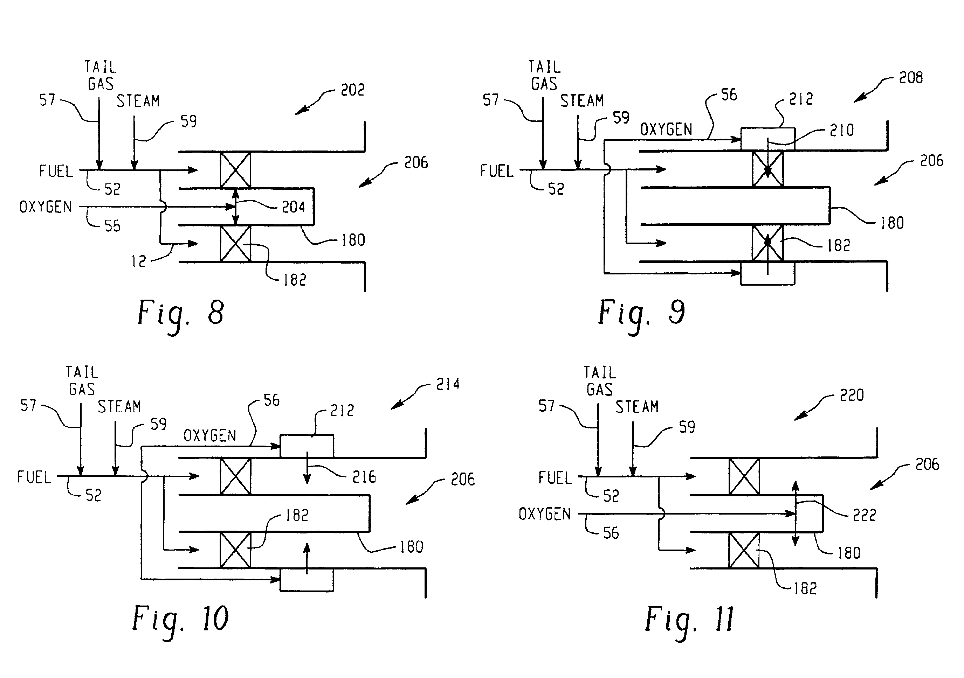

FIGS. 8-11 are diagrammatical illustrations of exemplary configurations 200 of the premixing device 180 of FIG. 8 having different oxygen injection locations. For example, in an exemplary configuration 202, the fuel slipstream 52 introduced in the premixing device 202 is pre-conditioned via the swirler vanes 182. Further, the oxygen slipstream 56 is introduced within the premixing device 202 through the swirler vanes 182 in a transverse direction to the direction of fuel slipstream 52, as represented by reference numeral 204. Again, as described before, the fuel slipstream 52 can be augmented by tail gas 57 or steam 59. The fuel slipstream 52 and oxygen slipstream 56 are premixed to form the gaseous pre-mix that is directed to the combustion chamber 162 (see FIG. 7) through an exit 206.

In another exemplary configuration 208, the fuel slipstream 52 is similarly introduced and pre-conditioned via the swirler vanes 182. Further, oxygen slipstream 56 is injected through holes 210 disposed on the burner tube, as represented by reference numeral 212. In particular, the oxygen slipstream 56 is injected through the burner tube 212 into the swirler vanes 182 in a transverse direction to the direction of the fuel slipstream 52. In an alternate embodiment represented by reference numeral 214, the oxygen slipstream 56 is injected through the burner tube 212 at injection points disposed downstream of the swirler vanes 182. Thus, the oxygen slipstream 56 is injected in a transverse direction 216 to the direction of the fuel slipstream 52 via the injection points in the burner tube 212. Further, as illustrated in configuration 220, the oxygen slipstream 56 is introduced through the center body of the premixing device and is injected in a transverse direction at a location downstream of the swirler vanes 182, as represented by reference numeral 222.

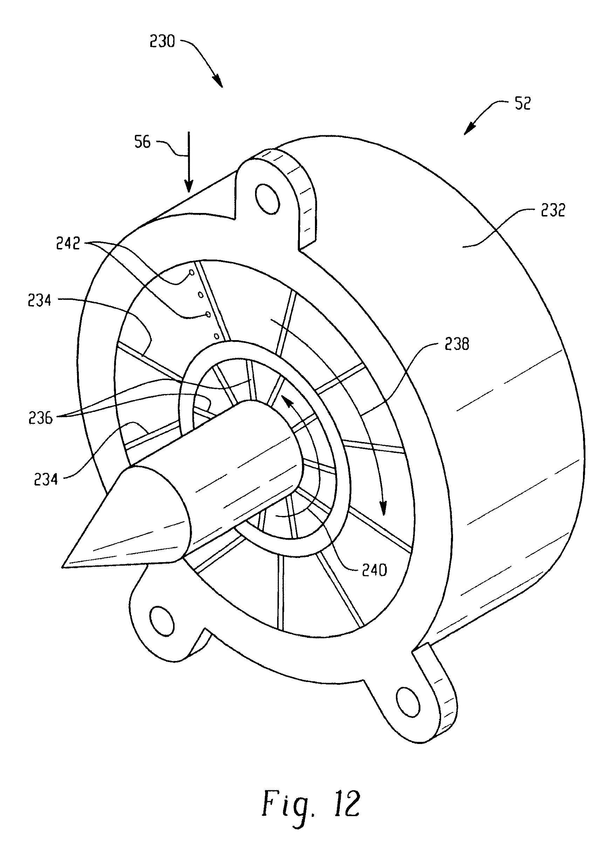

FIG. 12 is a diagrammatical illustration of another exemplary configuration 230 of the premixing device 150 of FIG. 7. As illustrated, the premixing device 230 includes a fuel inlet 232 to introduce the fuel slipstream 52 within the premixing device 230. Further, the premixing device 232 includes a plurality of swirler vanes 234 to provide a swirl movement to the fuel slipstream 52. Additionally, the premixing device 230 includes a plurality of counter flow swirl vanes 236 disposed adjacent to the plurality of swirler vanes 234. The direction of movement of the swirl and counter flow swirl vanes 234 and 236 is represented by reference numerals 238 and 240 respectively. In this exemplary embodiment, the fuel slipstream 52 flows from the inlet 232 upstream of the swirler vanes 234. Further, oxygen slipstream 56 is introduced through a plurality of holes 242 disposed on the swirler vanes 234.

In this embodiment, the total effective area for the plurality of holes 242 can be about 1/2 of the effective area of the swirler vanes 234. Further, the number of swirler vanes 234 can be about 4 to about 15. Similarly, the number of counter flow swirler vanes 236 can be about 4 to about 15. Additionally, the turning angle for each of the swirler vanes 234 and 326 can be about 20 degrees to about 55 degrees. In one embodiment, the turning angle of the counter flow swirler vanes 236 can be relatively greater than the turning angle of the swirler vanes 234. As described earlier, the fuel slipstream 52 is pre-conditioned through the swirler vanes 234 and 236 and oxygen slipstream 56 is premixed with the pre-conditioned fuel stream to form a gaseous pre-mix that is directed to the combustion chamber 162 (see FIG. 7) through an exit.

Subsequently, the gaseous pre-mix undergoes partial oxidation combustion at elevated temperature and pressure in the combustion chamber 162 to form syngas.

The fuel reformer systems comprising the premixing devices described above can be advantageously employed in a gas turbine system to improve the efficiency of the gas turbine, while permitting higher turndown and reduced combustion dynamics, when compared to the gas turbine systems without the fuel reformer system. The fuel reformer system can be employed in any gas turbine system benefiting from reduced emissions and improved efficiency. Moreover, the fuel reformer system as described has a relatively small size that allows it to be retrofitted to existing gas turbine systems with little capital expenditure or redesign. The retrofit system reforms the existing fuel supply for the gas turbine. Not only, therefore, does the fuel reformer system 12 improve the combustion dynamics of the gas turbine system 10, but it does so without the need to outlay the capital costs associated with buying an entirely new gas turbine system. Another advantage of the retrofit system is that it can be serviced without interfering with the gas turbine operation. For example, the retrofit fuel reformer system could be taken off line and serviced (e.g., catalyst changed), and the fuel supply is allowed to bypass the system, thereby preventing interruption to the gas turbine operation.

The fuel reformer systems can be used in simple cycle gas turbines and combined cycle gas turbines. Examples of gas turbine systems for use with the fuel reformer system can include staged gas turbine systems, reheat gas turbine systems, combinations comprising at least one of the foregoing, and the like.

For instance, in one embodiment, the fuel reformer system can supply the hydrogen-enriched fuel mixture as a secondary fuel stream configured to reheat a working gas stream in a reheat gas turbine system. In another embodiment, the fuel reformer system can supply the hydrogen-enriched fuel mixture as a secondary fuel stream configured for combustion in a second stage of a staged gas turbine system, wherein the combustion of the hydrogen-enriched fuel mixture in the second stage lowers a lean blow out point of the gas turbine. Moreover, the hydrogen-enriched fuel mixture can control, simultaneously, an amount of nitrogen oxides formed in the combustor and a stability of a flame in the staged gas turbine combustors.

In one embodiment, a staged gas turbine system can include an intake section; a compressor section downstream from and in fluid communication with the intake section; a combustor section comprising a primary combustion system downstream from and in fluid communication with the compressor section; a secondary combustion system downstream from and in fluid communication with the primary combustion system; and a fuel reformer system in fluid communication with the primary and the secondary combustion systems, wherein the fuel reformer system is configured to provide a hydrogen-enriched fuel mixture to the primary and secondary combustion systems. In a further embodiment, one or both of the primary secondary combustion systems can include an injector configured to transversely inject the hydrogen-enriched fuel mixture in the combustors. Moreover, a controller can be used to determine a load capacity of the gas turbine system and inject the hydrogen-enriched fuel mixture into one of the combustion systems based on the load of the gas turbine system. For example, if the gas turbine is operating at full load capacity, the hydrogen-enriched fuel mixture can be injected into the secondary combustion system to maximize the richness in the combustor. However, if the gas turbine system is operating at a partial load capacity (e.g., less than full), the hydrogen-enriched fuel mixture can be injected into the primary combustion system to maximize the richness in that combustor.

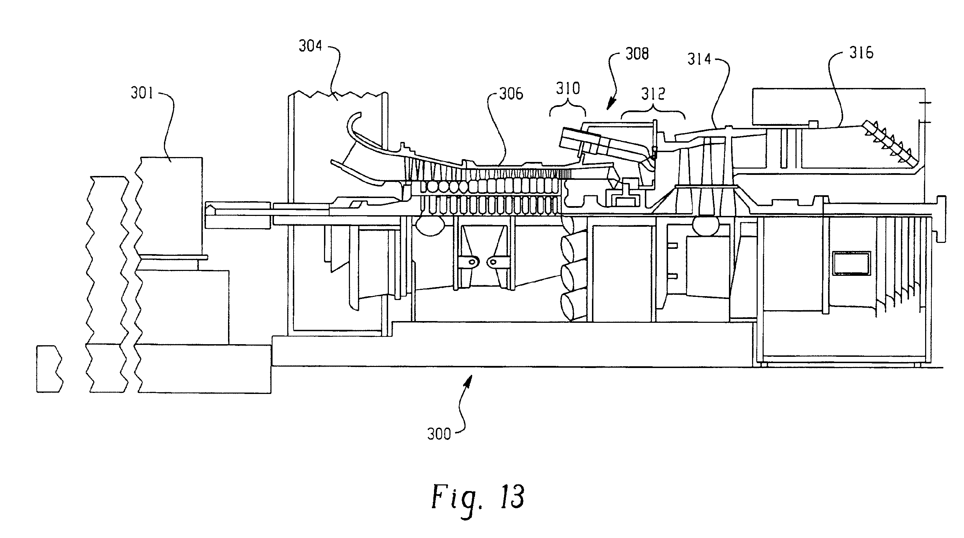

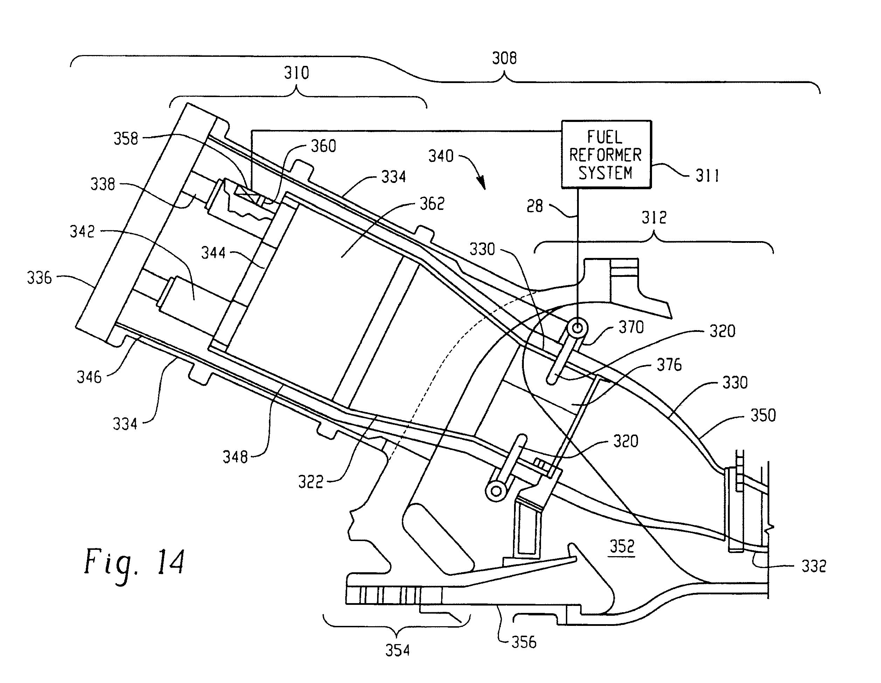

One example of an exemplary embodiment of such a gas turbine system is illustrated in FIG. 13. In FIG. 13, the turbine containing system 300 includes an intake section 304, a compressor section 306 downstream from the intake section 304, a combustor section 308 having a primary combustion system 310 downstream from the intake section 306, a secondary combustion system 312 downstream from the primary combustion system 310, a turbine section, 314 and an exhaust section 316. As best seen in FIG. 14, the secondary combustion system 312 includes an injector 320 for transversely injecting a syngas from the fuel reformer system into a stream of combustion products of the primary combustion system 310.

Referring again to FIGS. 13 and 14, the turbine containing system 300 includes a compressor section 306, a combustor section 308, and a turbine section 314. The turbine section 314, through a common shaft connection, can be configured to drive the compressor section 306 and a load 301. The load 301 can be any one of an electrical generator, a mechanical drive application, a propeller, a combination comprising at least one of the foregoing, and the like. Examples of applications for such loads can be power generation, marine propulsion, gas compression, cogeneration, off-shore platform power, and the like.

The combustor section 308 can include a circular array of a plurality of circumferentially spaced combustors 340. A fuel/oxygen mixture is burned in each combustor 340 to produce the hot energetic flow of gas, which flows through a transition piece 330 for flowing the gas to the turbine nozzles 332 of the turbine section 314. For purposes of the present description, only one combustor 340 is illustrated, it being appreciated that all of the other combustors 340 arranged about the combustor section 308 can be substantially identical to the illustrated combustor 340. Although FIG. 13 shows a plurality of circumferentially spaced combustors 340 and FIG. 14 shows a cross section of a combustor 340 that have come to be known in the art as can combustor systems, it is contemplated that the present disclosure may be used in conjunction with other combustor systems including and not limited to annular combustor systems.

Referring now to FIG. 14, there is shown generally a combustor 340 for the turbine containing system 300, which includes the primary combustion system 310, a secondary combustion system 312, and a combustion zone 322 for flowing hot gases of combustion to the turbine nozzles 332 and the turbine blades (not shown). The primary combustion system 310 includes a casing 334, an end cover 336, a plurality of start-up fuel nozzles 338, a plurality of premixing fuel nozzles 342, a cap assembly 344, a flow sleeve 346, and a combustion liner 348 within the sleeve 346. An ignition device (not shown) can be provided and can comprise an electrically energized spark plug. Combustion in the primary combustion system 310 occurs within the combustion liner 348. Oxygen can be directed within the combustion liner 348 via the flow sleeve 346 and enter the combustion liner 348 through a plurality of openings formed in the cap assembly 344. The oxygen enters the combustion liner 348 under a pressure differential across the cap assembly 344 and mixes with fuel from the start-up fuel nozzles 338 and/or the premixing fuel nozzles 342 within the combustion liner 348. Consequently, a combustion reaction occurs within the combustion liner 348 releasing heat for the purpose of driving the turbine section 314. High-pressure oxygen for the primary combustion system 310 enters the flow sleeve 346 and a transition piece impingement sleeve 350, from an annular plenum 352. A compressor section 306, which is represented by a series of vanes and blades at 354 and a diffuser 356, can supply this high-pressure oxygen. Each premixing fuel nozzle 342 can include a swirler 358, consisting of a plurality of swirl vanes that impart rotation to the entering oxygen and a plurality of fuel spokes 360 that distribute fuel in the rotating oxygen stream. The fuel and oxygen can then mix in an annular passage within the premix fuel nozzle 342 before reacting within the primary reaction zone 362.

The secondary combustion system 312 includes the assembly 370 for communication with an injector 320 that is provided for operating at high inlet temperature conditions. The injector is in fluid communication with the annular plenum 352 to deliver an oxygen cooling flow to the injector 320. The cooling flow is mixed with the fuel supply in the injector so that both the fuel system and the cooling flow are in fluid communication with the secondary combustion system 312. Within the fuel supply system a fuel reformer system 311 is in fluid communication with the secondary combustion system 312, wherein an injector 320 is configured to inject the hydrogen-enriched fuel mixture 68 from the fuel reformer system into the combustor 308. The fuel reformer system can also be in fluid communication with the primary combustion system 310, specifically the pre-mix fuel nozzles 342 can inject the hydrogen-enriched fuel mixture 68 into the combustor. The assembly 370 can include a plurality of injectors 320 that penetrate the combustion liner 348 and introduce the hydrogen-enriched syngas fuel mixture 68 into the secondary reaction zone 376 within the combustor assembly 340. The injectors 320 can protrude into the liner, or in an alternative embodiment, they can comprise non-intrusive jets. The hot products of combustion exiting the primary reaction zone 362 ignite the syngas. The resulting secondary hydrocarbon fuel oxidation reactions go to substantial completion in the transition piece 330. The syngas can be injected into the secondary reaction zone 376. The fuel reformer system preconditions and mixes the syngas with fuel prior to being introduced into the secondary reaction zone and, specifically prior to being introduced into the fuel mixture manifolds 374.

In operation, the staged combustion of the primary combustion system and the secondary combustion system, together with the hydrogen-enriched syngas mixture from the fuel reformer system, can be capable of reducing NO_{X} emission levels by reducing the total combustion residence time. Moreover, the hydrogen-rich syngas fuel mixture employed in the stage combustion systems can allow for higher turndown and improved combustion dynamics in the combustion system 300. The fuel reformer system 311 provides a low cost means of generating the hydrogen to shorten the combustion residence time, and it can do so using the existing fuel supply 24 to the gas turbine system. As a result thereof, the turbine containing system 300 can drive the load 301 in a more sustainable manner.

During the operation of the turbine containing system 300 (referring to FIG. 13), oxygen is drawn into intake section 304 for compression by compressor section 306 downstream. A portion of the compressed oxygen is delivered to the primary combustion system 310 of combustor section 308 for combination and combustion with a fuel mixture in a primary reaction zone 362 of each of the plurality of combustors 340. As the formation of NO_{X} is temperature dependant, the combustion temperature can be designed to minimize NO_{X} formation.

As the primary combustion products move downstream to the secondary combustion system 312 (referring to FIG. 14) additional fuel mixed with oxygen and the hydrogen-enriched syngas fuel mixture are introduced through injectors 320. As in the primary combustion section 310, the peak combustion temperature and time can be controlled to minimize NO_{X} formation. This can be achieved by controlling a variety of aspects of the secondary combustion system 312 including the placement of the injectors 320 relative to the primary combustion system 310. For example, the injectors 320 can be provided to any one of a can flow sleeve 346 of the combustor 340, a transition piece 330 of a combustor 340, and an interface between a can flow sleeve 346 and a transition piece 330 of the combustor 340. Also, the injectors 320 can be provided to the turbine section 314 such as, for example, a first stage turbine nozzle 332 of the turbine section 314. In one embodiment, the injectors 320 of the secondary combustion system 312 can be provided substantially perpendicular to the entrance of the transition piece 330.

The hot products of combustion exiting the secondary combustion system 312 enter the turbine section 314. The turbine section 314, through a common shaft connection, can drive the compressor section 306 and the load 301. It will be appreciated by those skilled in the art that the turbine section 314 can include a plurality of turbines such as, for example, a high-pressure turbine and low-pressure turbine or a high-pressure turbine, medium-pressure turbine and low-pressure turbine. Likewise, the compressor section 306 can include a plurality of compressors such as, for example, a low-pressure compressor and high-pressure compressor or a low-pressure compressor, a medium-pressure compressor and high-pressure compressor. The hot combustion products upon exiting the turbine section 314 enter the exhaust section 316.

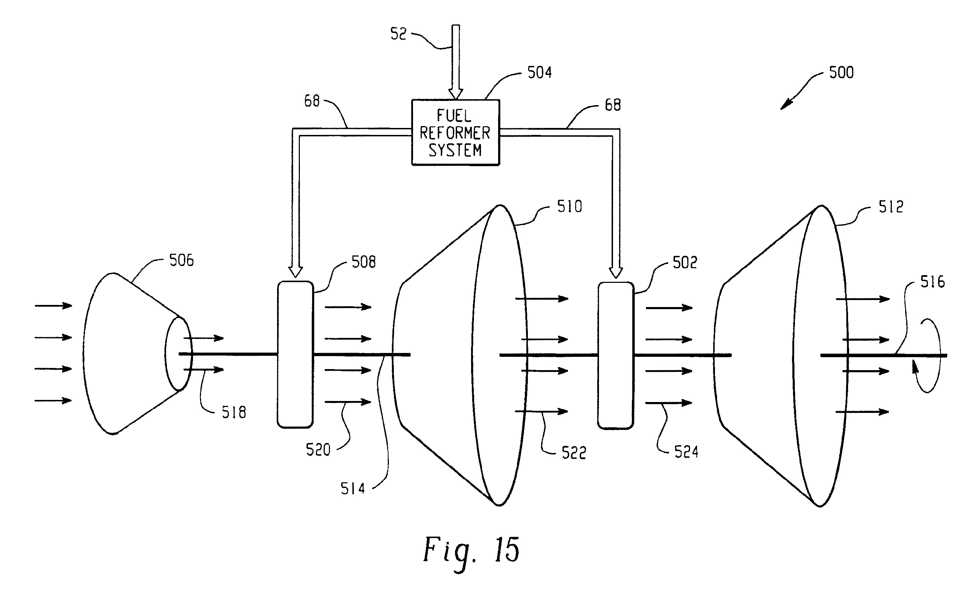

Turning now to FIG. 15, the fuel reformer system described herein can also be advantageously disposed in a gas turbine system utilizing reheat combustion between turbine stages. Like the staged combustion gas turbine system described above, the fuel reformer system can function with a reheat gas turbine system to enhance power output and efficiency of the gas turbines in both simple cycle and combined cycle systems. Turning now to drawings and referring first to FIG. 15, a gas turbine system 500 having a reheating device 502 is illustrated. The fuel reformer system 504 can be in fluid communication with the reheating device 502 and/or the combustor 508 to provide the hydrogen-enriched fuel mixture to the gas turbine system 500. The gas turbine system 500 can further include a compressor assembly 506 and a combustor 508 in fluid communication with the compressor assembly 506. Further, the gas turbine system 500 can include a first turbine 510 and a second turbine 512 located downstream of the combustor 508. In the illustrated embodiment, the compressor assembly 506 is driven by the power generated by the first turbine 510 via a shaft 514. Further, the second turbine 512 can be configured to drive an external load. In the illustrated embodiment, a separate shaft 516 is coupled to the second turbine 512 to drive the external load.

In operation, the compressor assembly 506 receives an oxygen stream and compresses the flow of the stream to produce a flow of compressed air 518. The flow of compressed oxygen 518 is then directed to the combustor 508 to combust a fuel stream and to generate a combustor gas stream 520. Moreover, the combustor gas stream 520 is partially expanded through the first turbine 510. In the illustrated embodiment, a flow of the gas 522 expanded from the first turbine 510 is directed to the reheating device 502. As illustrated, the reheating device 502 is in fluid communication with the first turbine 510 and is configured to introduce the hydrogen-enriched syngas fuel mixture 68 from the fuel reformer system 504 in a transverse direction to the working gas stream 522 for combusting the hydrogen-enriched syngas fuel mixture 68 in presence of the working gas stream 522 to generate an exit gas stream 524. Again, as used herein, the term "transverse" refers to a direction at right angles to the longitudinal axis of the working gas stream flow direction. The exit gas stream 524 is subsequently expanded through the second turbine 512. The reheating device 502 employed for facilitating the reheat combustion between the first and second turbines 510 and 512 will be described in greater detail below. As will be appreciated by those skilled in the art, this second combustion reaction facilitates raising the temperature of the gas flow entering the second turbine 512 (often referred to as "power turbine"), thereby enhancing the power output and efficiency of the gas turbine system 500. Further, the second turbine 512 is configured to expand the exit gas stream 524 from the reheating device 502 for driving the external load. The reheating device 502 employed in the gas turbine system 500 is configured to increase the temperature of the gas flow without introducing high emissions.

The various embodiments of a fuel reformer system for lowering of a lean blow out point as well as controlling combustion dynamics and a method for operating the same described above thus provide a way to achieve a sustained lean, premixed or partially premixed flame in the combustor without lean blow-out or combustion dynamics. These techniques and systems also allow for highly efficient gas turbine engines with a fuel reformer retrofit unit due to improved combustion in their respective combustors. As described herein, embodiments of the present disclosure provide gas turbine combustion systems incorporating the fuel reformer system in a manner effective to enhance power output and efficiency of the systems, whether staged gas turbine systems or reheat gas turbine systems. The reformer system utilized in the systems includes mixing and reacting a slipstream of fuel or fuel with a slipstream of oxygen to increase a concentration of hydrogen. The introduction of hydrogen into the fuel allows lowering of a lean blow out point and enables reduction in combustion dynamics for the gas turbine combustion system. Moreover, the preconditioning and mixing zones of the fuel reformer system utilize a premixing device configured to facilitate premixing of the fuel and oxygen, thereby reducing the time required to form the hydrogen-enriched syngas and improve the efficiency of the fuel reformer system. Again, different configurations can be envisaged for the fuel reformer system and the reheat and staged gas turbine systems described herein, depending upon the operational layout and the requirements of the system application.

Ranges disclosed herein are inclusive and combinable (e.g., ranges of "up to about 25 weight percent (wt%), or, more specifically, about 5 wt% to about 20 wt%", is inclusive of the endpoints and all intermediate values of the ranges of "about 5 wt% to about 25 wt%," etc.). "Combination" is inclusive of blends, mixtures, alloys, reaction products, and the like. Furthermore, the terms "first," "second," and the like, herein do not denote any order, quantity, or importance, but rather are used to distinguish one element from another, and the terms "a" and "an" herein do not denote a limitation of quantity, but rather denote the presence of at least one of the referenced item. The modifier "about" used in connection with a quantity is inclusive of the state value and has the meaning dictated by context, (e.g., includes the degree of error associated with measurement of the particular quantity). The suffix "(s)" as used herein is intended to include both the singular and the plural of the term that it modifies, thereby including one or more of that term (e.g., the colorant(s) includes one or more colorants). Reference throughout the specification to "one embodiment", "another embodiment", "an embodiment", and so forth, means that a particular element (e.g., feature, structure, and/or characteristic) described in connection with the embodiment is included in at least one embodiment described herein, and may or may not be present in other embodiments. In addition, it is to be understood that the described elements may be combined in any suitable manner in the various embodiments.

While the disclosure has been described with reference to an exemplary embodiment, it will be understood by those skilled in the art that various changes may be made and equivalents may be substituted for elements thereof without departing from the scope of the disclosure. In addition, many modifications may be made to adapt a particular situation or material to the teachings of the disclosure without departing from the essential scope thereof. Therefore, it is intended that the disclosure not be limited to the particular embodiment disclosed as the best mode contemplated for carrying out this disclosure, but that the disclosure will include all embodiments falling within the scope of the appended claims.

Various aspects and embodiments of the present invention are defined by the following numbered clauses:
1. A gas turbine system comprising:
   a fuel reformer system comprising:
      a fuel inlet configured to receive a fuel slipstream;
      an oxygen inlet configured to introduce an oxygen slipstream;
      a preconditioning zone configured to pretreat the fuel slipstream;
      a mixing zone configured to mix the oxygen slipstream into the fuel slipstream to form a gaseous premix;
      a reaction zone configured to generate a syngas from the gaseous premix;
      a quench zone configured to mix a fuel stream into the syngas to form a hydrogen-enriched fuel mixture; and
      a gas turbine configured to receive the fuel mixture.
2. The system of Clause 1, wherein the preconditioning zone comprises a plurality of swirler vanes.
3. The system of Clause 1, wherein the hydrogen-enriched fuel mixture is introduced to a gas turbine premixer to mix with an oxygen stream.
4. The system of Clause 1, wherein the hydrogen-enriched fuel mixture is a secondary fuel stream configured to reheat a working gas stream.
5. The system of Clause 1, wherein the hydrogen-enriched fuel mixture is a secondary fuel stream configured for combustion in a second stage of a combustor of the gas turbine.
6. The system of Clause 1, further comprising a steam inlet configured to introduce steam to the pre-mixing device.
7. The system of Clause 1, wherein the fuel reformer system has a volume that is 2% to 75% of a volume of a combustion section of the gas turbine.
8. The system of Clause 1, further comprising a heat exchanger disposed downstream of and in fluid communication with the reaction zone, wherein the heat exchanger is configured to simultaneously cool the syngas and pre-heat the fuel slipstream.
9. The system of Clause 1, further comprising a water gas shift reactor disposed downstream of and in fluid communication with the reaction zone, wherein the water gas shift reactor is configured to increase a hydrogen content of the syngas.
10. The system of Clause 3, wherein the oxygen slipstream is a portion of the oxygen stream.
11. The system of Clause 8, further comprising a control valve to control a volume ratio of the oxygen slipstream to the oxygen stream.
12. The system of Clause 1, further comprising a control valve to control a volume ratio of the fuel slipstream to the fuel stream.
13. A gas turbine system, comprising:
   an intake section;
   a compressor section downstream from and in fluid communication with the intake section;
   a combustor section comprising a primary combustion system downstream from and in fluid communication with the compressor section;
   a secondary combustion system downstream from and in fluid communication with the primary combustion system;
   a fuel reformer system in fluid communication with the primary combustion system and the secondary combustion systems, wherein the fuel reformer system is configured to provide a hydrogen-enriched fuel mixture to the primary combustion system and/or secondary combustion system, and wherein the fuel reformer system comprises:
      a fuel inlet configured to receive a fuel slipstream;
      an oxygen inlet configured to introduce an oxygen slipstream;
      a preconditioning zone configured to pretreat the fuel slipstream;
      a mixing zone configured to mix the oxygen slipstream into the fuel slipstream to form a gaseous premix;
      a reaction zone configured to generate a syngas from the gaseous premix; and
      a quench zone configured to mix a fuel stream into the syngas to form a hydrogen-enriched fuel mixture; and
      a turbine section downstream from and in fluid communication with the secondary combustion system.
14. The system of Clause 13, further comprising a controller configured to determine a load capacity of the gas turbine system and inject the hydrogen-enriched fuel mixture into the secondary combustion system when the gas turbine system is operating at a full load capacity, and into the primary combustion system when the gas turbine system is operating at a partial load capacity.
15. The system of Clause 13, wherein the preconditioning device comprises a plurality of swirler vanes.
16. A gas turbine system comprising:
   an intake section;
   a compressor section downstream from and in fluid communication with the intake section, configured to compress an oxygen stream;
   a combustor section downstream from and in fluid communication with the compressor section, wherein the combustor section is configured to receive the compressed oxygen stream and to combust a fuel stream to generate a combustor exit gas stream;
   a primary turbine downstream from and in fluid communication with the combustor section, configured to partially expand the combustor exit gas stream to form a working gas stream;
   a fuel reformer system wherein the fuel reformer system is configured to provide a hydrogen-enriched fuel mixture to the primary combustion system and/or a reheat device, wherein the fuel reformer system comprises
   a fuel inlet configured to receive a fuel slipstream;
   an oxygen inlet configured to introduce a oxygen slipstream;
   a preconditioning zone configured to pretreat the fuel slipstream;
   a mixing zone configured to mix the oxygen slipstream into the fuel slipstream to form a gaseous premix;
   a reaction zone configured to generate a syngas from the gaseous premix; and
   a quench zone configured to mix a fuel stream into the syngas to form a hydrogen-enriched fuel mixture; and
   the reheating device disposed downstream from and in fluid communication with the primary turbine and the fuel reformer system, configured to combust the working gas stream and the a hydrogen-enriched fuel mixture to form an exit gas stream;
   a second turbine downstream from and in fluid communication with the reheating device configured to expand the exit gas stream.
17. The system of Clause 16, wherein the fuel reformer system has a volume that is 2% to 75% of a volume of the gas turbine combustion section.
18. The system of Clause 16, wherein the oxygen slipstream is a portion of the compressed oxygen stream.
19. The system of Clause 16, further comprising a control valve to control a volume ratio of the oxygen slipstream to the oxygen stream.
20. The system of Clause 16, further comprising a control valve to control a volume ratio of the fuel slipstream to the fuel stream.

## Claims

1. A gas turbine system (10, 300, 500) comprising:
a fuel reformer system (12, 50, 80, 110, 130, 311, 504) comprising:
a fuel inlet configured to receive a fuel slipstream (30, 52, 84);
an oxygen inlet configured to introduce an oxygen slipstream (32, 56, 88);
a preconditioning zone (54) configured to pretreat the fuel slipstream;
a mixing zone (34, 58) configured to mix the oxygen slipstream into the fuel slipstream to form a gaseous premix;
a reaction zone (60) configured to generate a syngas (42, 62) from the gaseous premix;
a quench zone (66) configured to mix a fuel stream into the syngas to form a hydrogen-enriched fuel mixture (48, 68); and
a gas turbine (22) configured to receive the fuel mixture.

2. The system (10, 300, 500) of Claim 1, wherein the preconditioning zone (54) comprises a plurality of swirler vanes (156, 182, 234, 236, 238).

3. The system (10, 300, 500) of Claim 1 or 2, wherein the hydrogen-enriched fuel mixture (48, 68) is introduced to a gas turbine premixer (16) to mix with an oxygen stream.

4. The system (10, 500) of any of the preceding Claims, wherein the hydrogen-enriched fuel mixture (48, 68) is a secondary fuel stream configured to reheat a working gas stream (520).

5. The system (10, 300) of any of claims 1 to 3, wherein the hydrogen-enriched fuel mixture (48, 68) is a secondary fuel stream configured for combustion in a second stage (312) of a combustor of the gas turbine.

6. The system (10, 300, 500) of any of the preceding Claims, further comprising a steam inlet configured to introduce steam (36, 59) to the mixing zone (34, 58).

7. The system of any of the preceding Claims, further comprising a heat exchanger disposed downstream of and in fluid communication with the reaction zone, wherein the heat exchanger is configured to simultaneously cool the syngas and pre-heat the fuel slipstream.

8. The system of any of the preceding Claims, further comprising a water gas shift reactor disposed downstream of and in fluid communication with the reaction zone, wherein the water gas shift reactor is configured to increase a hydrogen content of the syngas.

9. The system of Claim 3, wherein the oxygen slipstream is a portion of the oxygen stream.

10. The system of Claim 9, further comprising a control valve to control a volume ratio of the oxygen slipstream to the oxygen stream.

11. The system of any of the preceding Claims, further comprising a control valve to control a volume ratio of the fuel slipstream to the fuel stream.

12. The system (300) of any of the preceding Claims, further comprising:
an intake section (304);
a compressor section (306) downstream from and in fluid communication with the intake section;
a combustor section (308) comprising a primary combustion system (310) downstream from and in fluid communication with the compressor section;
a secondary combustion system (312) downstream from and in fluid communication with the primary combustion system;
wherein the fuel reformer system (311) is in fluid communication with the primary combustion system and the secondary combustion systems, wherein the fuel reformer system is configured to provide a hydrogen-enriched fuel mixture to the primary combustion system and/or secondary combustion system,
a turbine section (314) downstream from and in fluid communication with the secondary combustion system.

13. The system (300) of Claim 12, further comprising a controller configured to determine a load capacity of the gas turbine system and inject the hydrogen-enriched fuel mixture into the secondary combustion system (312) when the gas turbine system is operating at a full load capacity, and into the primary combustion system (310) when the gas turbine system is operating at a partial load capacity.

14. The system (500) of any of the preceding Claims, further comprising:
a compressor section (506) downstream from and in fluid communication with an intake section, configured to compress an oxygen stream (518);
a combustor section (508) downstream from and in fluid communication with the compressor section, wherein the combustor section is configured to receive the compressed oxygen stream and to combust a fuel stream to generate a combustor exit gas stream (520);
a primary turbine (510) downstream from and in fluid communication with the combustor section, configured to partially expand the combustor exit gas stream to form a working gas stream (522);
wherein the fuel reformer system (504) is configured to provide a hydrogen-enriched fuel mixture to the primary combustion system and/or a reheat device (502);
the reheating device disposed downstream from and in fluid communication with the primary turbine and the fuel reformer system, configured to combust the working gas stream and the a hydrogen-enriched fuel mixture to form an exit gas stream (524);
a second turbine (512) downstream from and in fluid communication with the reheating device configured to expand the exit gas stream.

15. The system (10, 300, 500) of any of the preceding Claims, wherein the fuel reformer system (12, 50, 80, 110, 130, 311, 504) has a volume that is 2% to 75% of a volume of the gas turbine combustion section (20, 308, 508).
